# EUROPEAN PATENT APPLICATION

(11) **EP 4 269 219 A1**
(43) Date of publication of application: **01.11.2023**
(21) Application number: 21911018.6
(22) Date of filing: 23.12.2021
(51) Int. Cl.: B62D 65/00

(54) **VEHICLE ASSEMBLY KIT, METHOD FOR MANUFACTURING VEHICLE ASSEMBLY KIT, AND METHOD FOR MANUFACTURING VEHICLE**

(30) Priority: 25.12.2020 JP 2020217804
(71) Applicant: 3DOM ALLIANCE INC., Tokyo 107-0052 (JP)
(72) Inventor: KAWAMATA Kanako, Yokohama-shi, Kanagawa 221-0022 (JP); AGA Satoshi, Yokohama-shi, Kanagawa 221-0022 (JP); YAGI Norihiko, Yokohama-shi, Kanagawa 221-0022 (JP)
(74) Representative: Winter, Brandl - Partnerschaft mbB
(86) International application number: PCT/JP2021/048055
(87) International publication number: WO 2022/138879

(57) **Abstract**

An embodiment of the present invention provides a vehicle assembly kit. This assembly kit comprises a housing body and a frame. The housing body is configured so as to be able to house the frame. The frame constitutes part of a vehicle.

## Description

### BACKGROUND

The present invention relates to an assembly kit of a vehicle, a manufacturing method of assembly kit of the vehicle, and a manufacturing method of the vehicle.

### RELATED ART

Patent document 1 discloses an electric vehicle assembly kit.

### PRIOR ART DOCUMENTS

### Patent document

[Patent Document 1] JP 2013-249050 A

### SUMMARY

### Problems to be Solved by Invention

The present invention aims to provide a vehicle that can be easily assembled.

### Means for Solving Problems

According to an aspect of the invention, an assembly kit of a vehicle is provided. The assembly kit comprises a container and a frame. The container is configured to accommodate the frame. The frame configures a part of the vehicle.

With such an assembly kit of vehicle, it is possible to simplify vehicle assembly.

### BRIEF DESCRIPTION OF DRAWINGS

FIG. 1 is a perspective view of an assembly kit 100.
FIG. 2 is a perspective view of a first container 10a.
FIG. 3 is a perspective view of a base frame 2.
FIG. 4 is a perspective view of a state in which a tire 71 is attached to a base frame 2.
FIG. 5 is a perspective view of a state in which a floor panel 5fl is attached to a base frame 2.
FIG. 6 is a perspective view of a state in which a front portion 76 is attached to a support portion 75.
FIG. 7 is a perspective view of a state in which a support frame 3 is attached to a base frame 2.
FIG. 8 is a perspective view of a state in which a panel 5 is attached to a support frame 3 to configure a roof 4.
FIG. 9 is a rear perspective view of FIG. 8.
FIG. 10 is a schematic diagram of a first container 10a in plane view.
FIG. 11 is an example of six-view drawings of a first container 10a.
FIG. 12 is an example of six-view drawings of a first container 10a.
FIG. 13 is an enlarged view of a plane view of FIG. 12.
FIG. 14 is an activity diagram showing a manufacturing method of an assembly kit 100.
FIG. 15 is an activity diagram showing a manufacturing method of a vehicle 1.

### DETAILED DESCRIPTION

Hereinafter, embodiment of the present invention will be described with reference to drawings. Various features described in the embodiment below can be combined with each other.

### 1. Assembly kit 100

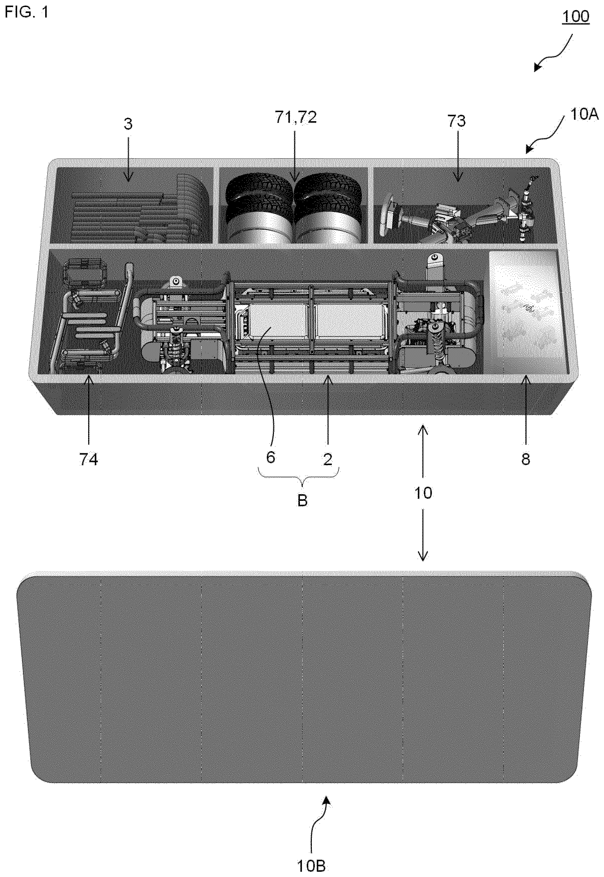

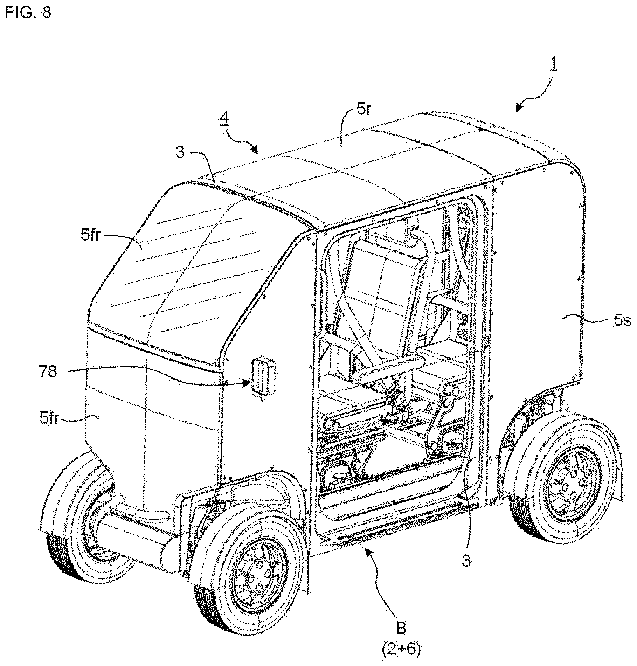

As shown in FIG. 1, an assembly kit 100 of a vehicle 1 (see FIG. 8) according to an embodiment of the present invention is configured to accommodate a member or a module configuring the vehicle 1 in a container 10. A user, such as an employee or a purchaser, can then easily assemble the vehicle 1 using the member or the module accommodated in the container 10.

The assembly kit 100 comprises a container 10 and a frame F. The container 10 may include a first container 10a and a second container 10b. The first container 10a is configured to accommodate a member or a module. The second container 10b functions as a lid covering the first container 10a.

The member accommodated in the container 10 is a member for assembling the vehicle 1. The container 10 is configured to accommodate the frame F. The frame F configures a part of the vehicle 1. Further, the frame F includes a base frame 2 and a support frame 3. The frame F is configured to allow a panel 5 to be attached thereto. In the present embodiment, a roof 4 is configured by a plurality of panels 5 (see FIG. 8). The roof 4 covers at least a part of a passenger of the vehicle 1 and may be of any shape. The panel 5 is formed by at least a part of the container 10.

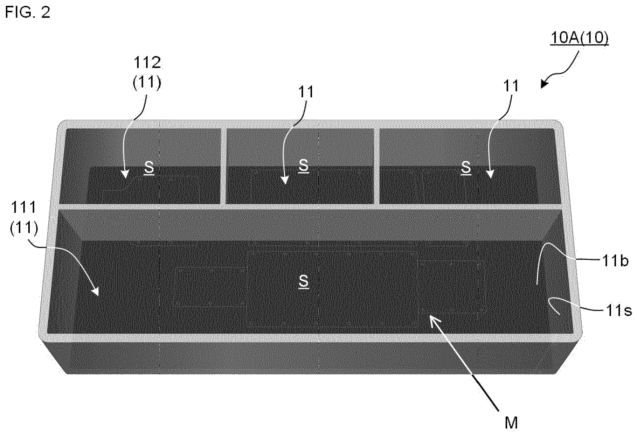

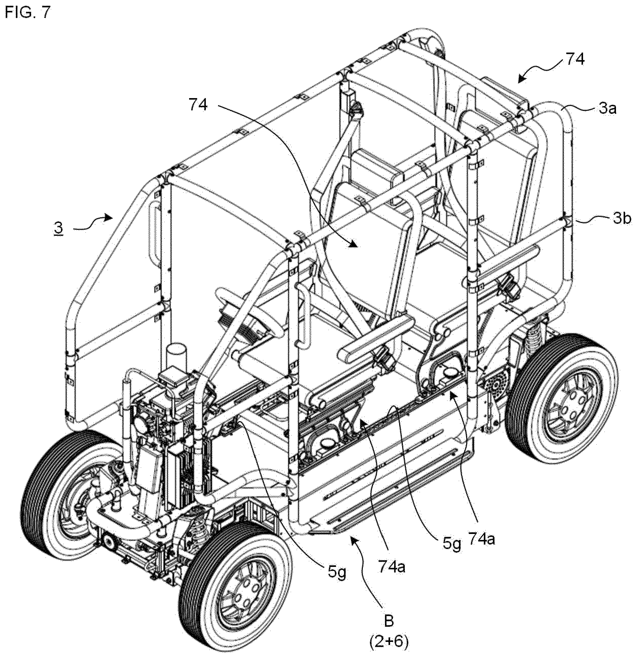

As shown in FIG. 2, the container 10 comprises a containing portion 11. The containing portion 11 comprises a bottom 11b and a side wall 11s, and includes a space S for accommodating a member or a module. Further, the containing portion 11 is configured to form a space S accommodating the frame F. Furthermore, the container 10 is configured to accommodate the support frame 3. Here, the support frame 3 is a frame configuring the roof 4 of the vehicle 1. As shown in FIGS. 7 and 8, in the present embodiment, the panel 5 is attached to the base frame 2 via the support frame 3.

In the present embodiment, the containing portion 11 comprises a first containing portion 111 and a second containing portion 112. The first containing portion 111 is configured to form a space S accommodating the base frame 2. Here, the base frame 2 is a frame that configures a base B of the vehicle. The second containing portion 112 is configured to form a space S accommodating the support frame 3.

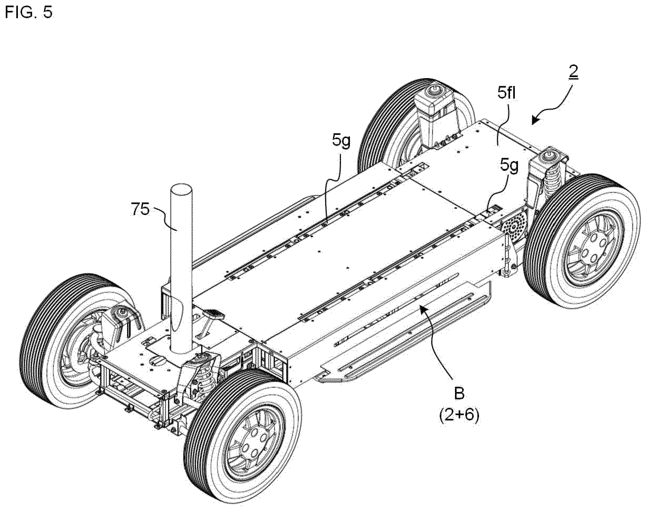

Then, a mark M corresponding to shape of the panel 5 is formed in the containing portion 11. In the present embodiment, a mark M corresponding to the shape of the panel 5 is formed in at least one of the first containing portion 111 and the second containing portion 112. FIG. 2 shows an example in which the mark M is formed in the bottom 11b of the containing portion 11, but it is not limited thereto. For example, instead of the bottom 11b, the mark M may be formed in a part of the side wall 11s, and a part of the side wall 11s may be used as the panel 5. Furthermore, instead of the containing portion 11, a mark M may be formed in a part of the second container 10b (lid) covering the containing portion 11, and a part of the lid may be used as the panel 5. In addition, a mark M corresponding to the shape of the panel 5 with the largest area in plane view may be formed in the containing portion 11 with the largest area in plane view. In the present embodiment, a mark M corresponding to the floor panel 5fl (see FIG. 5) is formed in the first containing portion 111. This is because the first containing portion 111 accommodates the base frame 2, and the base frame 2 is a member with the largest area in plane view among accommodation members.

The mark M may adopt any form, such as a notch that does not penetrate the containing portion 11, a plurality of through holes, or coloring with paint or other means. Here, the panel 5 is a notch of a part of the container 10 based on the mark M. In other words, the container 10 may be used to transport a component member or a module of the vehicle 1, and a part of the container 10 may be used as the panel 5 after content is taken out. This may save resource used in production of the panel 5.

A material of a part where the mark M is formed in the containing portion 11 is preferably a material that can be used as the panel 5. For example, polycarbonate or acrylic can be adopted as the material of the part of the containing portion 11 where the mark M is formed.

Returning to FIG. 1, content of the assembly kit 100 will be described. In the present embodiment, the assembly kit 100 comprises a base frame 2 and a support frame 3. Further, the assembly kit 100 may comprise a tire 71 and a wheel 72. Here, the container 10 is configured to accommodate the tire 71 and the wheel 72. Further, the assembly kit 100 may comprises a handle unit 73. In this case, the container 10 is configured to accommodate the handle unit 73. Moreover, the assembly kit 100 may comprise a seat 74. Furthermore, the assembly kit 100 may comprises an electric drive unit 6. The electric drive unit 6 is a unit that includes an electric drive component. The electric drive component may include at least one of a battery, a motor, and an inverter. Here, the motor and the inverter may be arranged between front wheels or rear wheels to efficiently convert electric power into driving force. The electric drive component is attached to the base frame 2. In the present embodiment, the electric drive component is grouped together as the electric drive unit 6 and attached to the base frame 2. Then, the base B is configured by the base frame 2 and the electric drive unit 6. Here, the assembly kit 100 comprises the base B. The base B comprises the base frame 2 and the electric drive component.

Extra space in the container 10 may be used to accommodate a component set 8. The component set 8 is a collection of parts other than the member described above, and may include, for instance, a wiring harness.

The member accommodated in the container 10 may be accommodated in the container 10 in a manner that does not require welding when assembling the vehicle 1. By accommodating the member in the container 10 in a pre-welded condition, workload at a manufacturing site is reduced. As a result, even a purchaser of the vehicle 1 can easily assemble the vehicle 1.

Moreover, since assembly of the electric drive unit 6 and the handle unit 73 may require specialized knowledge and specialized equipment, it is preferable to modularize them in advance and accommodate in the container 10.

### 2. Vehicle 1

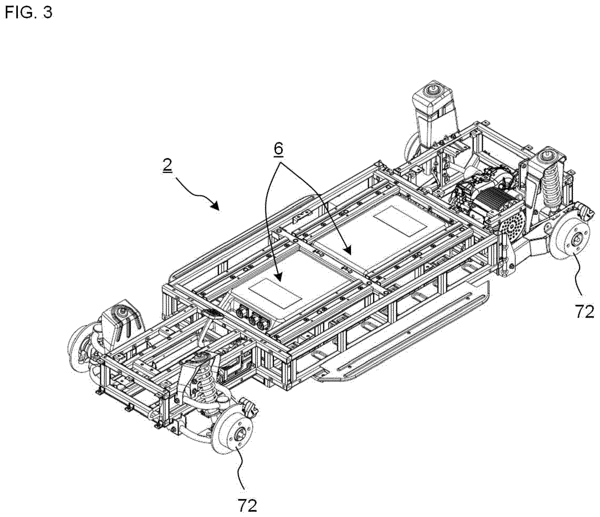

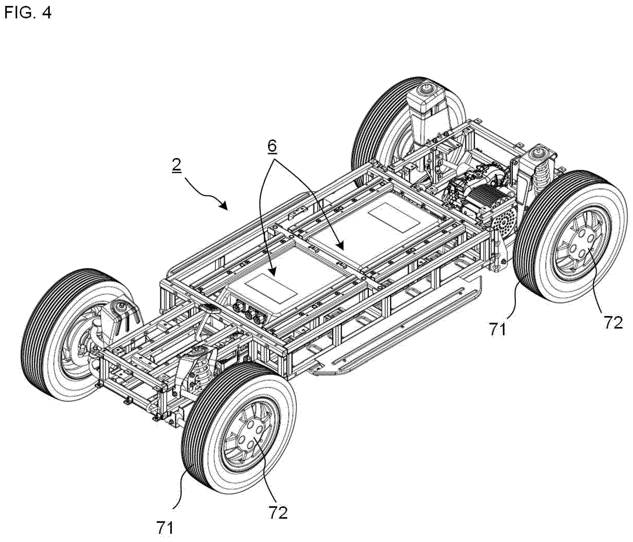

Next, the vehicle 1 will be described with reference to FIGS. 2 to 9. As shown in FIG. 3, the wheel 72 is attached to front and rear of the base frame 2. Here, number of wheels 72 is arbitrary, and one or more wheels 72 can be attached depending on shape of the base frame 2. Further, as shown in FIG. 4, the tire 71 is attached to the wheel 72. Furthermore, the electric drive unit 6 is arranged inside the base frame 2.

As shown in FIG. 5, a floor panel 5fl is attached with the electric drive unit 6 incorporated inside the base frame 2. The floor panel 5fl configures a floor part of an boarding space. Further, a groove 5g may be formed in the floor panel 5fl. In an example of FIG. 5, two grooves 5g are formed in the floor panel 5fl. A support portion 75 is attached in front of the floor panel 5fl.

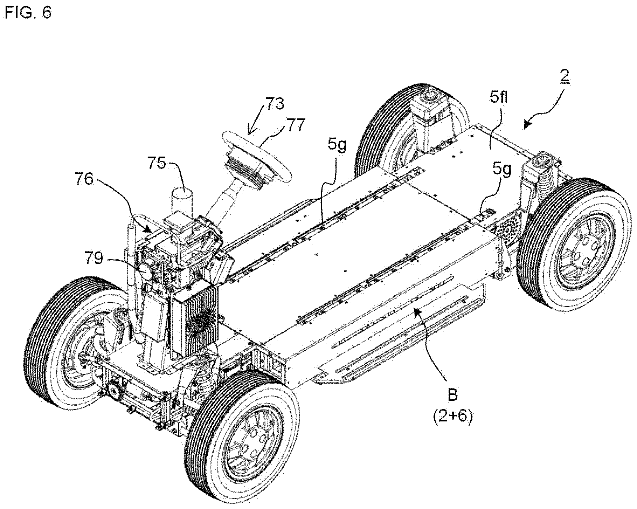

Then, as shown in FIG. 6, a front portion 76 is arranged via the support portion 75. The handle unit 73, a display unit 77, and a light 79 are attached to the front portion 76.

The handle unit 73 is a module that includes a handle for a passenger to operate the vehicle 1. If the vehicle 1 is a vehicle that supports automatic operation mode, it is assumed that a passenger does not use the handle unit 73 during the automatic operation mode, but uses the handle unit 73 during manual operation mode.

The display unit 77 is configured to display an image (still image and moving image). The display unit 77 may display an image based on a vehicle navigation system attached to the vehicle 1, or may connect to or pair with a smart device (e.g., a multi-functional information terminal such as a smartphone, a tablet, a wearable device, or a mobile PC) of a passenger and display an image based on the smart device.

The light 79 is preferably installed to notify a pedestrian of presence of the vehicle 1, even when the vehicle 1 is in the automatic operation mode.

As shown in FIG. 7, the seat 74 is attached to the floor panel 5fl. In the present embodiment, the seat 74 is attached to the floor panel 5fl by fitting the attaching portion 74a at lower part of the seat 74 into the groove 5g. The seat 74 is then configured to move back and forth along the groove 5g. In the example of FIG. 7, two seats 74 are attached, but the number of seats 74 is arbitrary. For instance, one or more seats 74 are provided when the vehicle 1 is supposed to be boarded by passengers. On the other hand, when the vehicle 1 is to transport luggage by automatic operation, the seat 74 does not need to be provided.

The support frame 3 is then attached to the base frame 2. The support frame 3 is configured of a plurality of frame parts 3a connected via a joint 3b. Shape and size of the support frame 3 are arbitrary.

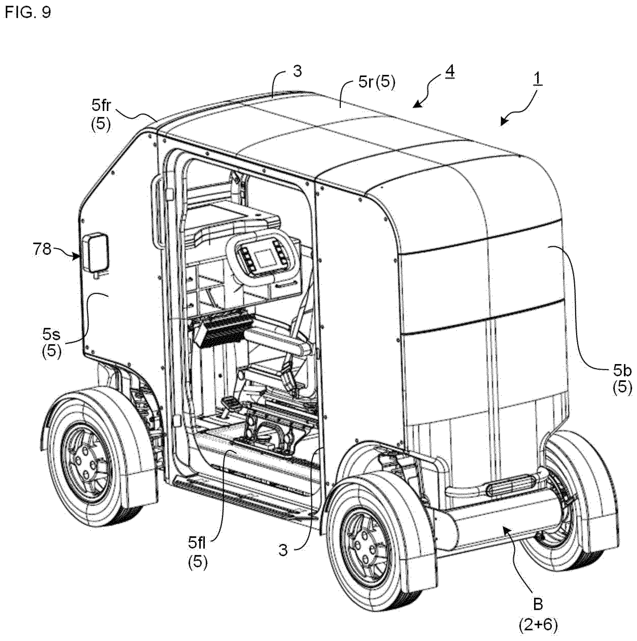

As shown in FIGS. 8 and 9, the panel 5 is attached to the frame F. In the present embodiment, the panel 5 is attached to the base frame 2 via the support frame 3. Then, the roof 4 is formed by the support frame 3 and the panel 5. Here, the panel 5 may include a front panel 5fr, a roof panel 5r, a rear panel 5b, a side panel 5s and a floor panel 5fl. The roof panel 5r, the rear panel 5b and the side panel 5s may then form the roof 4. Shape, number, and type of the panel 5 are arbitrary, and if the vehicle 1 is a vehicle corresponding to automatic operation mode, the front panel 5fr may block view of a passenger. On the other hand, if the vehicle 1 is not a vehicle corresponding to automatic operation mode, the panel 5 is installed in such a manner that view of a passenger is not obstructed by the front panel 5fr. In the example of FIG. 8, the front panel 5fr is formed of a transparent material. If the vehicle 1 is a vehicle corresponding to automatic operation mode, the front panel 5fr may be formed of a non-transparent material and the panel 5 may be attached in such a manner that the front panel 5fr blocks view of a passenger.

Further, the mirror 78 may be attached to the side panel 5s. Here, the mirror 78 is not required when the vehicle 1 is in automatic operation mode. Even when the vehicle 1 is in manual operation mode, the mirror 78 is not necessary when an image captured by a camera capable of capturing image behind the vehicle 1 is displayed on the display unit 77. Therefore, the mirror 78 should be removably attached to the side panel 5s, but it is not necessary to attach the mirror 78 in the first place.

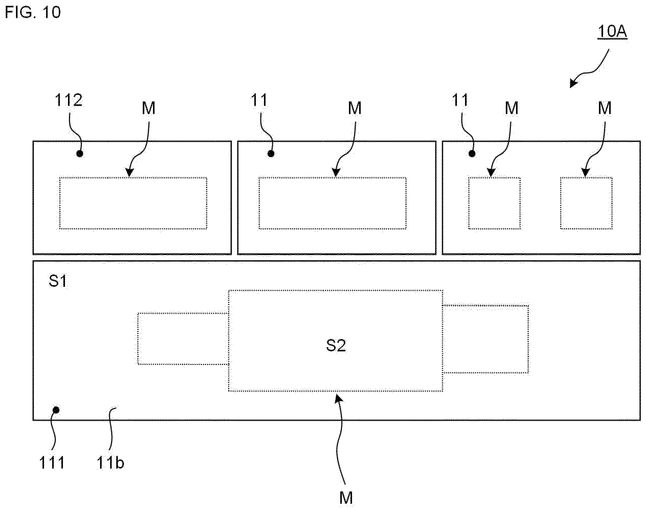

As shown in FIG. 10, the assembly kit 100 may be configured in such a manner that (area S1 in plane view of the first containing portion 111) / (area S2 in plane view of the panel 5 defined by the mark M) < 3. This allows at least 1/3 of the bottom 11b configuring the first containing portion 111 to be reused as the panel 5. Value of S1/S2 is between 1 and less than 3, specifically 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, less than 3, and may be in a range between any two of the values exemplified here.

Although size of the panel 5 that can be cut out from the container 10 is arbitrary, the following aspects can be adopted.
(1) Cut out part of the panel 5 (e.g., the floor panel 5fl) from the first containing portion 111 and part of the panel 5 (e.g., the front panel 5fr, the roof panel 5r, the side panel 5s, the rear panel 5b) from the second containing portion 112 and other containing portion 11. If all the panel 5 used in one vehicle 1 cannot be cut out from the container 10, remaining panel 5 may be accommodated in a dedicated panel container and transported.
(2) Prepare a container 10 that can accommodate a plurality of base frames 2, and configure in such a manner that the panel 5 used in one vehicle 1 can be cut out from one container 10.
(3) Although fill rate of the container 10 is reduced, one container 10 accommodates one base frame 2, and the panel 5 used in one vehicle 1 can be cut out from one container 10.

Thus, in any aspect, at least part of the container 10 used for transporting component member of the vehicle 1 can be used as the panel 5, which saves resource compared to the case where component member of the vehicle 1 and the panel 5 are transported separately.

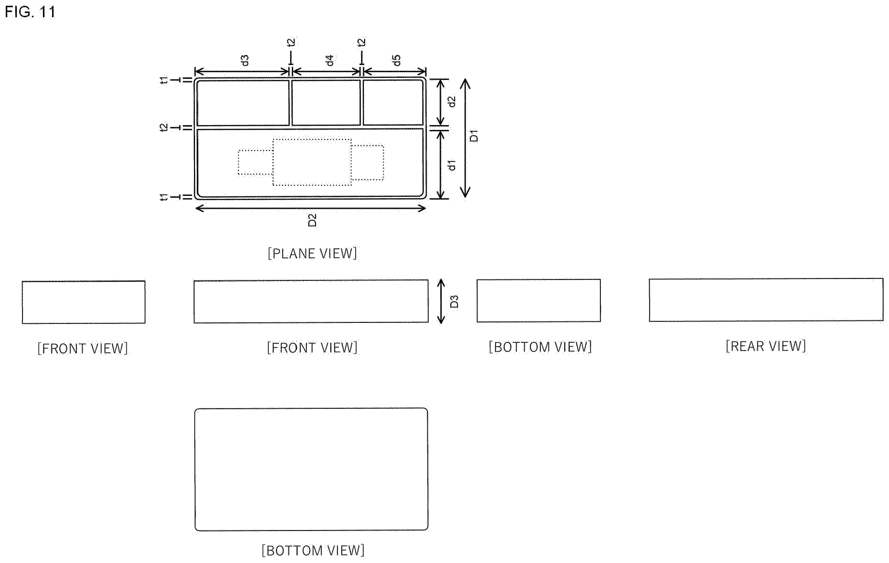

FIG. 11 is an example of six-view drawings of the container 10. Here, a dashed line part in a plane view represents the mark M (see FIG. 10). Vertical length D1, horizontal length D2, and height D3 of the container 10 are arbitrary, but can be in the following ranges, for instance.
D1: 300mm to 5,000mm
D2: 500mm to 15,000mm
D3: 100mm to 2,000mm

Thickness t1 of an outer wall of the container 10 and thickness t2 of a wall separating room may be the same or different thicknesses. Further, lengths d1 to d3 of the room can be designed as desired.

In the example in FIG. 11, each value is as follows, but is not limited thereto.
D1: 1,900mm
D2: 3,600mm
D3: 650mm
d1: 1,045mm
d2: 705mm
d3: 1,425mm
d4: 1,050mm
d5: 925mm
t1: 50mm
t2: 50mm

In particular, the mark M (see FIG. 10) represented in the plane view is a characteristic part of the design.

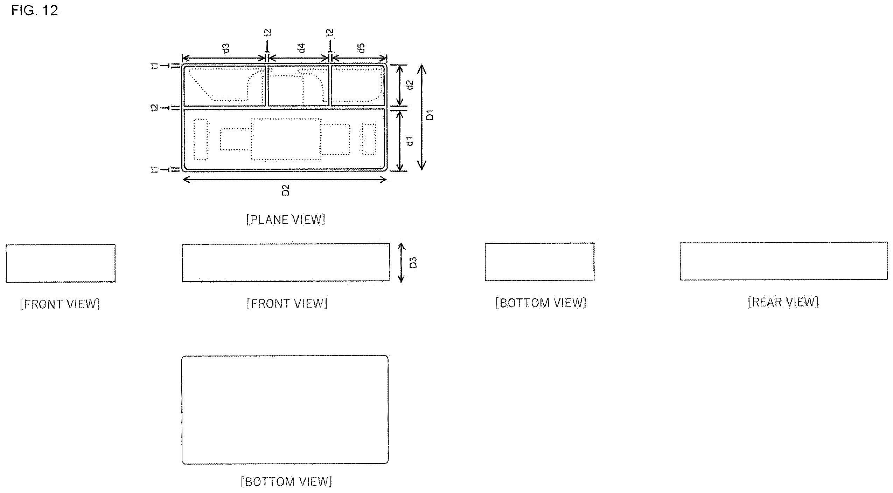

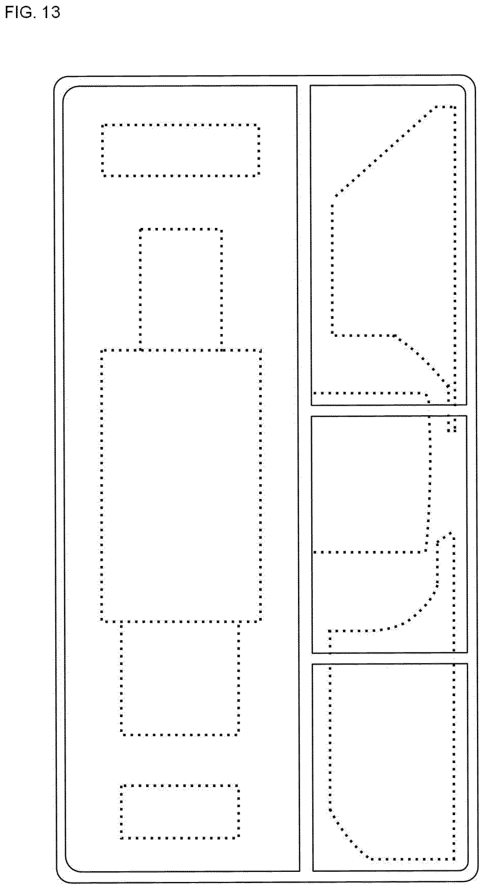

FIG. 12 is another example of six-view drawings of the container 10. As shown in FIG. 13, the mark M may be formed in each of the a plurality of containing portions 11.

### 3. Manufacturing method of assembly kit 100

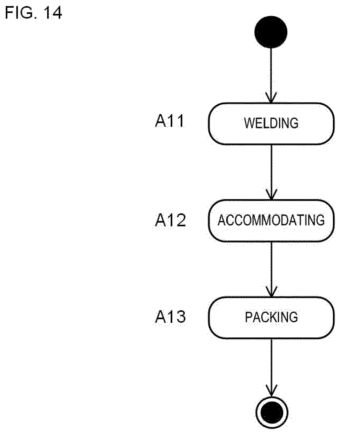

An assembly kit 100 is manufactured by a factory or other manufacturing site. As shown in FIG. 14, component member of the vehicle 1 that need to be welded are welded (A11). The welded member (e.g., the base frame 2) is then accommodated in the container 10 (A12). If necessary, the container 10 may be packed by packing material (A13).

In other words, the manufacturing method comprises an accommodation step. In the accommodation step, the frame F is accommodated in the container 10. Here, the container 10 is configured to accommodate the frame F. In particular, the container 10 may be configured to accommodate the base frame 2. The base frame 2 is a frame configuring the base B of the vehicle 1 and is configured to attach the panel 5. The panel 5 is formed by a part of the container 10. Further, the manufacturing method may comprise a packing step. In the packing step, the container 10 is packed.

The manufactured assembly kit 100 may be transported to another location or overseas location different from the manufacturing location of the assembly kit 100. In addition, the assembly kit 100 may be transported to a purchaser of the vehicle 1.

### 4. Manufacturing method of vehicle 1

A manufacturing method of the vehicle 1 using the assembly kit 100 at the location where the transported assembly kit 100 is received comprises a first taking out step, a second taking out step, and an attaching step.

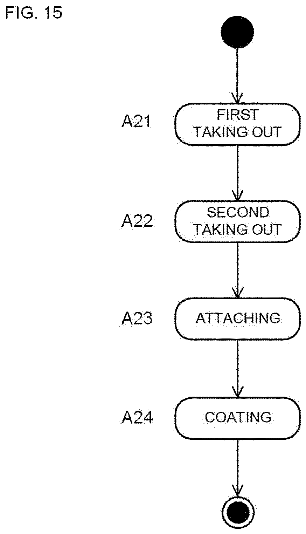

As shown in FIG. 15, in the first taking out step, the frame F is taken out from the container 10 (A21). In the second taking out step, the panel 5 formed by a part of the container 10 is taken out (A22). Then, in the attaching step, the panel 5 is attached to the frame F (A23).

Further, a coating step may be provided if necessary. In the coating step, the panel 5 is coated (A24). This can improve strength of the panel 5 or improve appearance of a surface of the panel 5. In particular, if the first containing portion 111 of the container 10 is damaged during transportation of the assembly kit 100, it is preferable to coat the panel 5 when the vehicle 1 is manufactured. If the manufacturing location of the vehicle 1 is a general household, the panel 5 can be coated with varnish or the like.

The above-mentioned manufacturing method can provide a vehicle 1 that can be easily assembled while saving resource.

### 5. Others

Each of the above-described embodiments may be implemented by the following manners.

Part of the container 10 that cannot be reused as the panel 5 is used as material for biomass power generation.

If volume of the container 10 is to be reduced, the tire 71 is not accommodated in the container 10, but is transported in a dedicated container for the tire 71.

Although it is preferable to complete high specialty task such as installation of the electric drive unit 6 into the base frame 2 and assembly of the handle unit 73 at the time of manufacturing the assembly kit 100, these tasks may be left to a manufacturing site in consideration of the level of manufacturing site.

Furthermore, the present invention may be provided in each of the following aspects.

The assembly kit, wherein: the frame is configured to allow a panel to be attached thereto, and the panel is formed by at least a part of the container.

The assembly kit, wherein: the container includes a containing portion configured to form a space that can accommodate the frame, and a mark corresponding to shape of the panel is formed in the containing portion.

The assembly kit, wherein: the panel is obtained by cutting out a part of the container based on the mark.

The assembly kit, wherein: the frame includes a support frame, the container is configured to accommodate the support frame, the support frame is a frame that configures a roof of the vehicle, and the panel is attached to the frame via the support frame.

The assembly kit, wherein: the frame includes a base frame that is a frame configuring a base of the vehicle, the container comprises a containing portion including a first containing portion configured to form a space that can accommodate the base frame and a second containing portion configured to form a space that can accommodate the support frame, and a mark corresponding to shape of the panel is formed in at least one of the first containing portion and the second containing portion.

The assembly kit, configured in such a manner that: (area S1 in plane view of the first containing portion) / (area S2 in plane view of the panel defined by the mark) < 3.

The assembly kit, wherein: the frame includes a base frame that is a frame configuring a part of the vehicle, and the assembly kit comprises a base including the base frame and an electric drive component, the electric drive component includes at least one of a battery, a motor, and an inverter, and the electric drive component is attached to the base frame.

The assembly kit, comprising: a tire and a wheel, wherein the container is configured to accommodate the tire and the wheel.

The assembly kit, comprising: a handle unit, wherein the container is configured to accommodate the handle unit.

The assembly kit, wherein: a member accommodated in the container is a member for assembling the vehicle and is accommodated in the container in a manner that does not require welding when assembling the vehicle.

A manufacturing method of an assembly kit of a vehicle, comprising: an accommodation step of accommodating a frame in a container, wherein the container is configured to accommodate the frame, and the frame is a frame configuring a part of the vehicle.

The manufacturing method, comprising: a packing step of packing the container.

A manufacturing method of a vehicle, comprising: a first taking out step of taking out a frame from a container, wherein the container is configured to accommodate the frame, and the frame is a frame configuring a part of the vehicle and is configured to allow a panel to be attached thereto; a second taking out step of taking out a panel formed by a part of the container; and an attaching step of attaching the panel to the frame.

The manufacturing method, comprising: a coating step of coating the panel.

Of course, the present invention is not limited to the above aspects.

Finally, various embodiments of the present invention have been described, but these are presented as examples and are not intended to limit the scope of the invention. The novel embodiment can be implemented in various other forms, and various omissions, replacements, and changes can be made without departing from the abstract of the invention. The embodiment and its modifications are included in the scope and abstract of the invention and are included in the scope of the invention described in the claims and the equivalent scope thereof.

### REFERENCE SIGNS LIST

1: Vehicle
2: Base frame
3: Support frame
3a: Frame parts
3b: Joint
4: Roof
5: Panel
5b: Rear panel
5fl: Floor panel
5fr: Front panel
5g: Groove
5r: Roof panel
5s: Side panel
6: Electric drive unit
8: Component set
10: Container
10a: First container
10b: Second container
11: Containing portion
11b: Bottom
11s: Side wall
71: Tire
72: Wheel
73: Handle unit
74: Seat
74a: Attaching portion
75: Support portion
76: Front portion
77: Display unit
78: Mirror
79: Light
100: Assembly kit
111: First containing portion
112: Second containing portion
B: Base
D3: Height
F: Frame
M: Mark
S: Space
S1: Area
S2: Area
t1: Thickness
t2: Thickness

## Claims

1. An assembly kit of a vehicle, comprising:
a container and a frame; wherein
the container is configured to accommodate the frame, and
the frame configures a part of the vehicle.

2. The assembly kit according to claim 1, wherein:
the frame is configured to allow a panel to be attached thereto, and
the panel is formed by at least a part of the container.

3. The assembly kit according to claim 2, wherein:
the container includes a containing portion configured to form a space that can accommodate the frame, and a mark corresponding to shape of the panel is formed in the containing portion.

4. The assembly kit according to claim 3, wherein:
the panel is obtained by cutting out a part of the container based on the mark.

5. The assembly kit according to any one of claims 2 to 4, wherein:
the frame includes a support frame,
the container is configured to accommodate the support frame,
the support frame is a frame that configures a roof of the vehicle, and
the panel is attached to the frame via the support frame.

6. The assembly kit according to claim 5, wherein:
the frame includes a base frame that is a frame configuring a base of the vehicle,
the container comprises a containing portion including a first containing portion configured to form a space that can accommodate the base frame and a second containing portion configured to form a space that can accommodate the support frame, and
a mark corresponding to shape of the panel is formed in at least one of the first containing portion and the second containing portion.

7. The assembly kit according to claim 6, configured in such a manner that:
(area S1 in plane view of the first containing portion) / (area S2 in plane view of the panel defined by the mark) < 3.

8. The assembly kit according to any one of claims 1 to 7, wherein:
the frame includes a base frame that is a frame configuring a part of the vehicle, and
the assembly kit comprises a base including the base frame and an electric drive component,
the electric drive component includes at least one of a battery, a motor, and an inverter, and
the electric drive component is attached to the base frame.

9. The assembly kit according to any one of claims 1 to 8, comprising:
a tire and a wheel, wherein the container is configured to accommodate the tire and the wheel.

10. The assembly kit according to any one of claims 1 to 9, comprising:
a handle unit, wherein the container is configured to accommodate the handle unit.

11. The assembly kit according to any one of claims 1 to 10, wherein:
a member accommodated in the container is a member for assembling the vehicle and is accommodated in the container in a manner that does not require welding when assembling the vehicle.

12. A manufacturing method of an assembly kit of a vehicle, comprising:
an accommodation step of accommodating a frame in a container, wherein the container is configured to accommodate the frame, and the frame is a frame configuring a part of the vehicle.

13. The manufacturing method according to claim 12, comprising:
a packing step of packing the container.

14. A manufacturing method of a vehicle, comprising:
a first taking out step of taking out a frame from a container, wherein the container is configured to accommodate the frame, and the frame is a frame configuring a part of the vehicle and is configured to allow a panel to be attached thereto;
a second taking out step of taking out a panel formed by a part of the container; and
an attaching step of attaching the panel to the frame.

15. The manufacturing method according to claim 14, comprising:
a coating step of coating the panel.
